# EUROPEAN PATENT APPLICATION

(11) **EP 2 448 268 A1**
(43) Date of publication of application: **02.05.2012**
(21) Application number: 10791347.7
(22) Date of filing: 19.05.2010
(51) Int. Cl.: H04N 7/52

(54) **DECODER POLLING PROCESSING METHOD, DECODER AND MONITORING SYSTEM**

(30) Priority: 24.06.2009 CN 200910087856
(71) Applicant: ZTE Corporation, Shenzhen, Guangdong 518057 (CN)
(72) Inventor: HUANG, Liang, Shenzhen Guangdong 518057 (CN); WEN, Lianghui, Shenzhen Guangdong 518057 (CN); HUO, Dongfeng, Shenzhen Guangdong 518057 (CN); GUAN, Jun, Shenzhen Guangdong 518057 (CN)
(74) Representative: Bongiovanni, Simone
(86) International application number: PCT/CN2010/072944
(87) International publication number: WO 2010/148841

(57) **Abstract**

The present invention provides a decoder polling processing method, a decoder and a monitoring system, this method comprises: a decoder receives a synchronous polling request which is sent by a client and carries a polling start time and a polling interval time; the decoder acquires a polling switching time according to the polling start time and the polling interval time; the decoder starts to acquire a media code stream of a first front-end monitoring device according to the polling start time, and switches to a second front-end monitoring device in polling mode when the polling switching time arrives, and acquires a media code stream of the second front-end monitoring device; and the decoder decodes the media code streams, generates a video-audio signal, and transmits the signal to a display device for playing. The present invention realizes that a plurality of decoders synchronously perform play and switch operation to the media code streams of the front-end monitoring devices in polling mode.

## Description

### Field of the invention

The invention relates to the video monitoring field, and in particular to a decoder polling processing method, a decoder and a monitoring system.

### Background of the invention

The video monitoring system has been developed rather maturely at present, and it is applied more and more widely, and the video monitoring is widely applied in many occasions for the advantages of perceptual intuition, convenience and abundant contents. In recent years, with the rapid development of computers, networks and image processing and transmission technologies, the video monitoring technology has also made a great progress.

The existing video monitoring system generally uses a front-end monitoring device to encode the acquired video images, and convert it to a media code stream, then transmit the media code stream to a decoder of a TV wall. One decoder can receive the media code streams of a plurality of front-end monitoring devices, the video image formats of the media code streams of the plurality of front-end monitoring devices may be different, and this decoder also can be compatible with the media code streams using various video formats. When the decoder receives a plurality of front-end monitoring devices, it usually plays the media code streams of different front-end monitoring devices in polling mode. If a monitoring site needs to be installed with a plurality of front-end monitoring devices, the plurality of front-end monitoring devices monitor the monitoring site in multi-angle and multi-direction, this decoder receives and plays the media code streams output by the plurality of front-end monitoring devices in polling mode.

At present, with the expansion of the monitoring scale, the TV walls has a plurality of decoders, and each decoder receives and plays the media code streams output by the plurality of front-end monitoring devices in polling mode.

However, the inventor found that the polling operation of each decoder is independent, e.g., the switching time for decoder 1 to switch from the media code stream output by a front-end monitoring device to a media code stream output by the next front-end monitoring device is inconsistent with the switching time for decoder 2 to switch from the media code stream output by a front-end monitoring device to a media code stream output by the next front-end monitoring device. Thus the decoder switching is caused to be asynchronous, thereby the users cannot conveniently observe the changes of different monitoring sites, and makes the monitoring effect of the TV walls being poor.

### Summary of the invention

The technical problem to be solved by the present invention is to provide a decoder polling processing method, a decoder and a monitoring system for a plurality of decoders to play and switch the media code streams output by the front-end monitoring devices in polling mode at the same time.

In order to solve the above problem, an embodiment of the invention provides a decoder polling processing method. The method comprises: receiving, by a decoder, a polling request which is sent by a client and carries a polling start time and a polling interval time; setting a polling switching time of the i-th polling switching = the polling start time + i * the polling interval time; acquiring a media code stream of a first front-end monitoring device at the polling start time; and switching to a second front-end monitoring device and acquiring a media code stream of the second front-end monitoring device at the polling switching time to perform the polling operation of the decoder.

The polling request further carries a system control time; the decoder sets its own system time according to the system control time.

Further, the method comprises: the decoder receives a synchronous time message sent by the client, and corrects its own system time according to the synchronous time message.

The decoder has a decoding channel, each decoding channel corresponds to a front-end monitoring device list, the first front-end monitoring device and the second front-end monitoring device are the front-end monitoring devices in one front-end monitoring device list which corresponds to a decoding channel of the decoder.

The time interval between the system control time and the polling start time is greater than the total time taken by the decoder for processing the polling request.

Further, the method comprises: receiving a polling stop command sent by the client, and stopping acquiring the media code stream according to the polling stop command.

In order to solve the above technical problem, the invention further provides a decoder, and the decoder comprises:
a first receiving module configured to receive a polling request which is sent by a client and carries a polling start time and a polling interval time; a first setting module configured tosett the polling switching time of the i-th polling switching = the polling start time + i * the polling interval time; a first acquisition module configured to acquire a media code stream of a first front-end monitoring device at the polling start time; a second acquisition module configured to switch to a second front-end monitoring device and acquire a media code stream of the second front-end monitoring device at the polling switching time.

Further, the decoder comprises: a second setting module configured to sett the own system time of the decoder according to a system control time carried by the polling request.

Further, the decoder comprises: a second receiving moduleconfigured to receive a synchronous time message sent by the client; a correction module, configured to correct the own system time of the decoder according to the synchronous time message.

In order to solve the above technical problem, an embodiment of the invention further provides a monitoring system, and the monitoring system comprises a client and at least one decoder, the client comprises: a sending module configured to send a synchronous polling request which carries a polling start time and a polling interval time; each decoder in the at least one decoder comprises: a first receiving module configured to receive the polling request sent by the client; a first setting module configured to set the polling switching time of the i-th polling switching = the polling start time + i * the polling interval time; a first acquisition module configured to acquire a media code stream of a first front-end monitoring device at the polling start time; a second acquisition module configured to switch to a second front-end monitoring device and acquire a media code stream of the second front-end monitoring device at the polling switching time.

The client further comprises: a configuration module configured to respectively configure a front-end monitoring device list for at least one decoding channel of the at least one decoder.

Further, the monitoring system comprises: a stream media server configured to store the media code streams output by the front-end monitoring devices; a content distribution server configured to store an address of the media code streams output by the front-end monitoring devices, and distribute it to the decoder.

Further, the monitoring system comprises: a service platform configured to store the registration information of the client, the at least one decoder, the stream media server and the content distribution server, and forward the polling request sent by the client to the corresponding decoder, respectively configure the front-end monitoring device list to at least one decoding channel of the decoder.

The advantages of the above technical scheme of the present invention are as follows.

In the above scheme, through the synchronous polling request which is sent by the client and carries a polling start time and a polling interval time, when the polling start time arrives, the decoding channel of the decoder starts to perform polling monitoring operation to the front-end monitoring devices monitored by it, and calculates the switching time to switch to the next front-end monitoring device according to the polling start time and the polling interval time; when the switching time is detected, the next front-end monitoring device is monitored. Therefore, each decoder can synchronously perform play and switch operation to the plurality of front-end monitoring devices monitored by it in polling mode, and thus monitors can observe the situations of the monitoring sites where the front-end monitoring devices locate more clearly, the urgent needs of users can be satisfied, so the users can conveniently observe and monitor the video-audio information of the plurality of front-end monitoring devices of the monitoring site.

### Brief description of the drawings

Fig. 1 is a structural block diagram of a monitoring system of an embodiment of the present invention;
Fig. 2 is an implementation structural block diagram of the system shown in Fig. 1;
Fig. 3 is a flow schematic diagram of a decoder polling processing method of the present invention;
Fig. 4 is an implementation schematic diagram of the method shown in Fig. 3;
Fig. 5 is an application flowchart of the method shown in Fig. 3; and
Fig. 6 is a structural block diagram of a video monitoring decoder of an embodiment of the present invention.

### Detailed description of the embodiments

To make the technical problem to be solved by the present invention, the technical scheme and the advantages of the present invention clearer, the present invention will be described in details hereinafter in conjunction with the accompanying drawings and the embodiments.

The invention provides a decoder polling processing method, a decoder and a monitoring system, which can synchronously perform play and switch operation to the media code streams output by the front-end monitoring devices in polling mode, aiming at the problem that users cannot conveniently observe the changes of different monitoring sites and the monitoring effect of the TV walls is poor since the decoder in the existing video monitoring system cannot synchronously perform play and switch operation to the media code streams output by the front-end monitoring devices in polling mode.

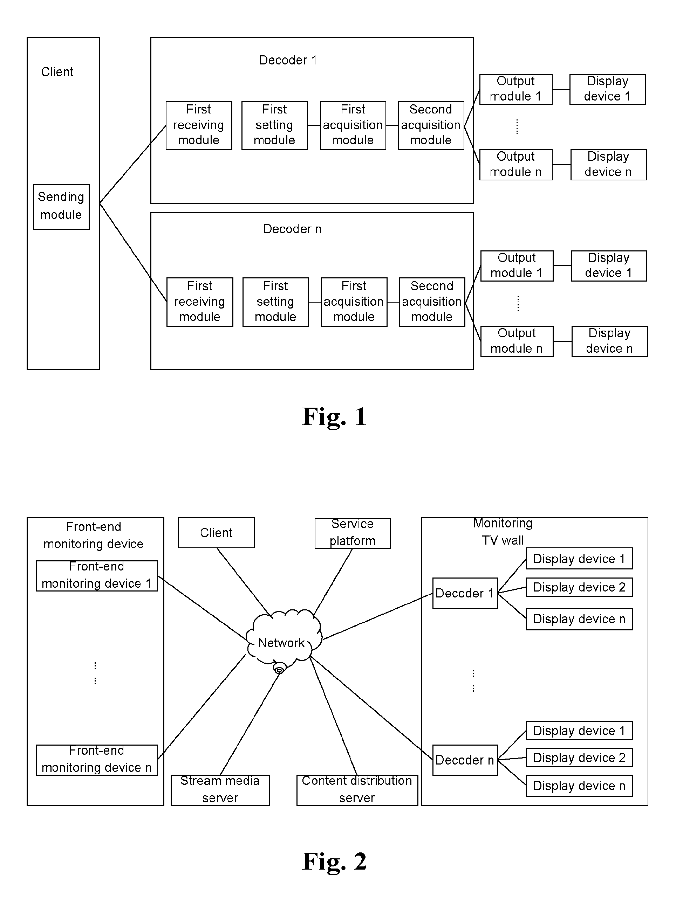

Fig. 1 shows a structural block diagram of a monitoring system of an embodiment of the present invention. The system comprises a client and at least one decoder. The client comprises:
a sending module, configured to send a synchronous polling request which carries a polling start time and a polling interval time.

Each decoder in the at least one decoder comprises:
a first receiving module configured to receive the polling request sent by the client;
a first setting module configured to set the polling switching time of the i-th polling switching = the polling start time + i * the polling interval time;
a first acquisition module configured to acquire a media code stream of a first front-end monitoring device at the polling start time; and
a second acquisition module configured to switch to a second front-end monitoring device and acquire a media code stream of the second front-end monitoring device at the polling switching time.

In this embodiment, through the synchronous polling request which is sent by the client and carries a polling start time and a polling interval time, when the polling start time arrives, the decoder starts to perform polling monitoring operation to the front-end monitoring devices monitored by it, and calculates the switching time for switching to the next front-end monitoring device according to the polling start time and the polling interval time.

Since the polling start time and the polling interval time received by each decoder are from the same synchronous polling request, when the polling start time arrives, each decoder can synchronously perform polling operation to the front-end monitoring devices, and when the polling switching time arrives, each decoder also can synchronously switch to the next front-end monitoring device. Therefore, each decoder can synchronously perform play and switch operation to the plurality of front-end monitoring devices monitored by it in polling mode, and thus monitors can observe the situations of the monitoring sites where the front-end monitoring devices locate more clearly, the urgent needs of the users can be satisfied, so the users can conveniently observe and monitor the video-audio information of the plurality of front-end monitoring devices of the monitoring site.

In addition, the above synchronous polling request can further comprise a system control time; the decoder can set its own system time according to the system control time. Therefore, when each decoder performs polling monitoring operation to the front-end monitoring devices, they will take the system control time as basic standard to start timing, and start to perform polling monitoring operation to the front-end monitoring devices when the polling start time arrives.

The implementation of the above system embodiment of the present invention is described hereinafter with reference to Fig. 2.

As shown in Fig. 2, the system can further comprise: at least one front-end monitoring device, a service platform, a stream media server, a content distribution server, a display device and etc..

The front-end monitoring device is configured to monitor the monitoring sites. The front-end monitoring device can be one or more video-audio acquisition devices set at the monitoring sites, such as video cameras, surveillance cameras and etc., and the front-end monitoring device encodes the acquired video-audio images into a media code stream and then sends it to the stream media server.

The stream media server is configured to store and forward the media code streams output by the front-end monitoring devices.

The content distribution server is configured to store an address of the media code streams output by the front-end monitoring devices, and distribute the address of the media code streams to the decoder in response to the request of the decoder. The decoder distributes the address to at least one decoding channel of the decoder.

The client is configured to configure and manage the front-end monitoring device and the decoder. This client can be a terminal device, and also can be a client program module operated on a computer.

The service platform is configured to be responsible for the registration and management of the monitoring device, the client, the decoder, the stream media server and the content distribution server, store the registration information of the client, the at least one decoder, the stream media server and the content distribution server, and forward the synchronous polling request sent by the client to a decoding channel of the corresponding decoder.

The at least one decoder and the display device connected with the decoder form a monitoring TV wall. Especially, one decoding channel of the decoder can be connected with one display device, and the decoder acquires the media code streams from the stream media server, decodes the media code streams, converts it into an analog video-audio signal, then outputs it to the display device for playing through the decoding channel.

In the embodiment shown in Fig. 2, based on the system shown in Fig. 1, the client can further comprise:
a configuration module configured to respectively configure a front-end monitoring device list for the at least one decoding channel of the at least one decoder.

This front-end monitoring device list can be forwarded to the decoder by the service platform. The acquisition module of the decoder starts to acquire, according to the polling start time, the media code streams of the front-end monitoring devices in the front-end monitoring device list which corresponds to the decoding channel, switches to the next front-end monitoring device in the front-end monitoring device list when the polling switching time arrives, and acquires the media code stream of the next front-end monitoring device.

In addition, in this system, the client can further initiate a synchronous time message, and the decoder can correct its own system time according to the synchronous time message after receiving the synchronous time message.

If the decoder receives a synchronous polling stop command sent by the client, then the decoder stops acquiring the media code streams of the front-end monitoring devices and closes the corresponding decoding channel according to the synchronous polling stop command.

In the system implementation shown in Fig. 2, as same as the embodiment shown in Fig. 1, through acquiring the synchronous polling request sent by the client and taking the system control time in the synchronous polling request as basic standard as start timing, when the polling start time arrives, performs polling monitoring to the front-end monitoring device monitored by it, and calculates the switching time to switch to the next front-end monitoring device according to the polling start time and the polling interval time. Since the system control time, the polling start time and the polling interval time received by each decoder are all the same, each decoder can synchronously perform play and switch operation to the plurality of monitored front-end monitoring devices in polling mode. Therefore, monitors can observe the situations of the monitoring front-ends more clearly, the urgent needs of users can be satisfied, and users can conveniently observe and monitor the video-audio information of the plurality of front-end monitoring devices of the monitoring site.

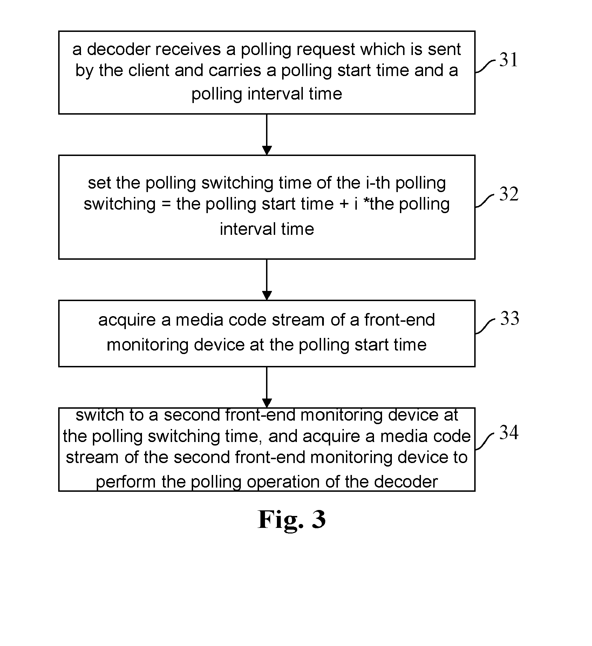

As shown in Fig. 3, an embodiment of the present invention further provides a decoder polling processing method, this method comprises the steps as follows.

Step 31, a decoder receives a polling request which is sent by the client and carries a polling start time and a polling interval time.

Step 32, sets the polling switching time of the i-th polling switching = the polling start time + i * the polling interval time.

Step 33, acquires a media code stream of a first front-end monitoring device at the polling start time.

Step 34, switches to a second front-end monitoring device and acquires a media code stream of the second front-end monitoring device at the polling switching time to perform the polling operation of the decoder.

In this method, the synchronous polling request in Step 31 can also carry a system control time; after receiving the synchronous polling request, the decoder firstly sets its own system time according to the system control time, and then starts to acquire the media code streams of the front-end monitoring devices when the polling start time arrives.

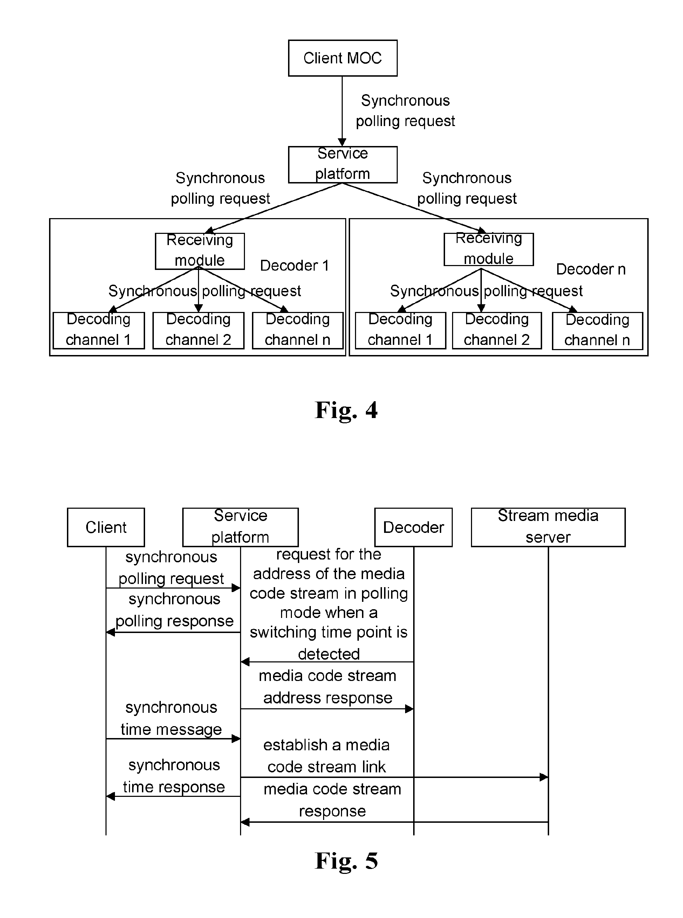

When implementing, referring to Fig. 4 and Fig. 5, the implementing flow of the above method is described as follows.

Step A, at least one decoder registers on the service platform after being started.

Step B, a user configures the decoding channel of the decoder through the client, and selects the front-end monitoring device list which needs to be played on the TV wall, i.e., respectively configures a front-end monitoring device list for each decoding channel of each decoder, wherein the front-end monitoring device list comprises at least one front-end monitoring device to which this decoding channel will perform polling operation.

Step C, the client selects the decoding channel which needs synchronous polling, performs batch operations, i.e., synchronous polling, and sends the synchronous polling request.

Step D, at least one decoder receives the synchronous polling request sent by the client, wherein this synchronous polling request carries a system control time, a polling start time and a polling interval time;
this synchronous polling request can be forwarded through the service platform, as shown in Fig. 4, in this way the decoding channels of the plurality of decoders can be conveniently configured by the client;
the synchronous polling request may carry a system control time; when the synchronous polling request is directly sent to the decoder, the system control time in the synchronous polling request can be the sending time of the synchronous polling request; and when the synchronous polling request is forwarded through the service platform, the system control time can be the system time of the service platform; and certainly the system control time also can be a system control time set by the user through the client.

Step E, at least one decoder distributes the synchronous polling request to at least one decoding channel of its own.

Step F, at least one decoder sets its own system time according to the system control time, and acquires the polling switching time according to the polling start time and the polling interval time.

In this step, the time interval between the system control time and the polling start time is greater than the total time taken by the at least one decoder for processing the synchronous polling request, i.e., the total time taken by the decoder for respectively distributing the synchronous polling request to at least one decoding channel of its own. Thus, it is ensured that each decoding channel has configured the system time after receiving the synchronous polling request, and starts polling when the polling start time arrives.

Step G, the decoding channel of at least one decoder starts to transmit, according to the polling start time, the media code stream of the front-end monitoring device in the front-end monitoring device list which corresponds to this decoding channel acquired by the decoder, and switches to the next front-end monitoring device in polling mode when the polling switching time arrives, and acquires the media code stream of the next front-end monitoring device.

In this step, the decoder can acquire the media code stream of the front-end monitoring device from the stream media server according to the address of the media code stream distributed by the content distribution server.

In addition, when the decoder is performing polling operation to the front-end monitoring devices, if the decoder receives a synchronous time information of the client, then the decoder starts to reset its own system time, and corrects the system time error, so that each decoder can be further corrected to further guarantee the synchronization mechanism if system time error occurs after each decoder has monitored for a while.

Step H, at least one decoder decodes the media code stream to generate a video-audio signal, and transmits the signal to the display device for playing through the decoding channel.

Step I, at least one decoder receives the synchronous polling stop command sent by the client, stops acquiring the media code stream of the front-end monitoring devices according to the synchronous polling stop command, and closes the decoding channel.

In summary, in this embodiment, through configuring the front-end monitoring devices to which the decoder performs polling operation, the client performs configuration operations to a plurality of decoders, and selects the decoding channels of a plurality of decoders for synchronous polling, and sends the synchronous polling request to each decoder; the synchronous polling request has been set with a system control time for a plurality of decoders to adjust their own system time using the same system control time. The decoder receives the synchronous polling request, and starts to perform polling operation, at the polling start time in the synchronous polling request, to the front-end monitoring devices in the front-end monitoring device list which corresponds to this decoding channel, and calculates the switching time point, starts to switch in polling mode when the switching time point is detected, so as to ensure that different decoders can perform synchronous switching at the same time.

In the above, the decoder corrects errors of its own system time and guarantees that the error range is within a certain selective range, an example is as follows.

When the decoding channels of the synchronous polling respectively belong to different decoders, and the client respectively sends the synchronous polling request to a plurality of decoders, there is no absolute guarantee mechanism to control the consistency of the sending time, so the interval between the system control time and the polling start time is greater than the time for distributing the synchronous polling request to a plurality of decoders, thus it is ensured that each decoder has configured its system time and starts polling at the same time after receiving the synchronous polling request.

Between the decoding channels of different decoders, since the system clock difference exists, in this embodiment, a method for actively correcting errors by the client is applied, and the asynchronization problem caused by the system clock difference of different decoders is avoided. The error range can be determined according to the requirements, and it is controlled within 10ms in this embodiment. Meanwhile, the system designs a synchronous time message, i.e., the system time is corrected once within a certain period, so as to further guarantee the synchronous mechanism.

In addition, in the above method, when the decoder starts to play the media code streams of a new front-end monitoring device, it requests the address of the media code streams from the content distribution server, and after acquiring the address of the media code streams, it connects to the stream media server to apply for the media code stream, then decodes and plays it.

When the client stops polling, it sends a synchronous polling stop command; the decoder receives the stop command, disconnects the stream media server, ends the polling and closes the decoding channel.

By virtue of the above embodiment of the present invention, a plurality of decoders can synchronously play the media code streams of the front-end monitoring devices in polling mode, and perform switching operation. Therefore, monitors can observe the situations of the monitoring front-end more clearly, and the urgent needs of users can be satisfied, thus the users can conveniently observe and monitor the video-audio signal of the monitoring site.

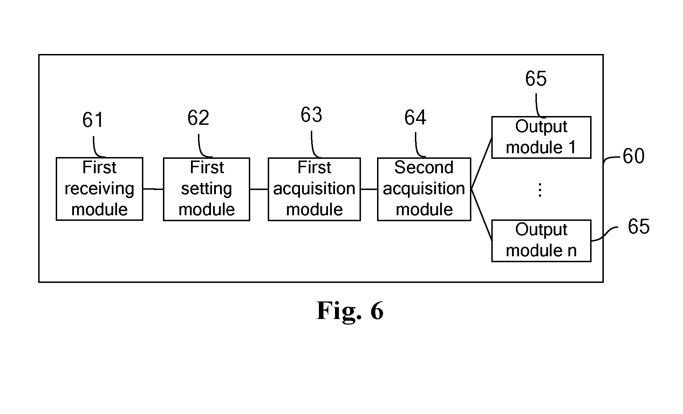

As shown in Fig. 6, an embodiment of the present invention further provides a decoder 60. The decoder 60 comprises:
a first receiving module 61 configured to receive a polling request which is sent by a client and carries a polling start time and a polling interval time;
a first setting module 62 configured to set the polling switching time of the i-th polling switching = the polling start time + i * the polling interval time;
a first acquisition module 63 configured to acquire a media code stream of a first front-end monitoring device at the polling start time;
a second acquisition module 64 configured to switch to a second front-end monitoring device and acquire a media code stream of the second front-end monitoring device at the polling switching time. The output module 65 can be a decoding channel in a decoder, and specifically, it can be an output interface of a decoder, for connecting with an external display device, and outputting the video-audio signal to the display device through the decoding channel or the output interface.

In this embodiment, the above synchronous polling request can further carry a system control time, and the decoder can further comprise: a setting module configured to set the own system time of the decoder according to the system control time after the decoder receives the synchronous polling request, and then perform polling monitoring operation to the front-end monitoring devices according to the polling start time.

During the decoder is performing polling operation to the front-end monitoring devices, if the synchronous time information of the client is received, the decoder can further reset its system time and correct the system time error; the decoder 60 can further comprise: a second receiving module configured to receive the synchronous time message sent by the client; in this case, the decoder 60 can further comprise: a correction module, configured to correct the own system time of the decoder according to the synchronous time message; thus, if a system time error occurs after each decoder has monitored for a while, ii can be further correct, so as to further ensure the synchronous mechanism.

Certainly, if the decoder receives a synchronous polling stop command sent by the client, it can further stop acquiring the monitoring of the front-end monitoring devices and close the decoding channel according to this synchronous polling stop command.

The decoder 60 is the same as the decoder in the system shown in Fig. 1, and all the characteristics in this embodiment are all suitable for the system.

The above is only the preferred embodiments of the present invention, it should be noticed that those skilled in the art can implement a plurality of improvements and modifications within the principle of the invention, and all the improvements and modifications are within the scope of protection of the present invention.

## Claims

1. A decoder polling processing method for a video monitoring system, **characterized in that** it comprises:
receiving, by a decoder, a polling request which is sent by a client and carries a polling start time and a polling interval time;
setting a polling switching time of the i-th polling switching = the polling start time + i * the polling interval time;
acquiring a media code stream of a first front-end monitoring device at the polling start time; and
switching to a second front-end monitoring device and acquiring a media code stream of the second front-end monitoring device at the polling switching time to perform the polling operation of the decoder.

2. The method according to claim 1, **characterized in that**,
the polling request further carries a system control time;
the decoder sets its own system time according to the system control time.

3. The method according to claim 1, **characterized in that** it further comprises:
the decoder receives a synchronous time message sent by the client, and corrects its own system time according to the synchronous time message.

4. The method according to claim 1, **characterized in that** the decoder has a decoding channel, each decoding channel corresponds to a front-end monitoring device list, and the first front-end monitoring device and the second front-end monitoring device are the front-end monitoring devices in one front-end monitoring device list which corresponds to a decoding channel of the decoder.

5. The method according to claim 1, **characterized in that** the time interval between the system control time and the polling start time is greater than the total time taken by the decoder for processing the polling request.

6. The method according to any one of claims 1 to 5, **characterized in that** it further comprises:
receiving a polling stop command sent by the client, and stopping acquiring the media code stream according to the polling stop command.

7. A decoder, **characterized in that** it comprises:
a first receiving module, configured to receive a polling request which is sent by a client and carries a polling start time and a polling interval time;
a first setting module, configured to set the polling switching time of the i-th polling switching = the polling start time + i * the polling interval time;
a first acquisition module, configured to acquire a media code stream of a first front-end monitoring device at the polling start time;
a second acquisition module, configured to switch to a second front-end monitoring device and acquire a media code stream of the second front-end monitoring device at the polling switching time.

8. The decoder according to claim 7, **characterized in that** it further comprises:
a second setting module, configured to set the system time of the decoder according to a system control time carried by the polling request.

9. The decoder according to claim 8, **characterized in that** it further comprises:
a second receiving module, configured to receive a synchronous time message sent by the client;
a correction module, configured to correct the system time of the decoder according to the synchronous time information.

10. A monitoring system, comprising a client and at least one decoder, **characterized in that**,
the client comprises:
a sending module, configured to send a synchronous polling request which carries a polling start time and a polling interval time;
each decoder in the at least one decoder comprises:
a first receiving module, configured to receive the polling request sent by the client;
a first setting module, configured to set the polling switching time of the i-th polling switching = the polling start time + i * the polling interval time;
a first acquisition module, configured to acquire a media code stream of a first front-end monitoring device at the polling start time;
a second acquisition module, configured to switch to a second front-end monitoring device and acquire a media code stream of the second front-end monitoring device at the polling switching time.

11. The monitoring system according to claim 10, **characterized in that** the client further comprises:
a configuration module, configured to respectively configure a front-end monitoring device list for at least one decoding channel of the at least one decoder.

12. The monitoring system according to claim 11, **characterized in that** it further comprises:
a stream media server, configured to store the media code stream output by the front-end monitoring devices;
a content distribution server, configured to store an address of the media code stream output by the front-end monitoring devices, and distribute it to the decoder.

13. The monitoring system according to claim 12, **characterized in that** it further comprises:
a service platform, configured to store the registration information of the client, the at least one decoder, the stream media server and the content distribution server, and forward the polling request sent by the client to the corresponding decoder, respectively configure the front-end monitoring device list to at least one decoding channel of the decoder.
